# EUROPÄISCHE PATENTSCHRIFT

(11) **EP 1 161 620 B1**
(45) Veröffentlichungstag und Bekanntmachung des Hinweises auf die Patenterteilung: **21.09.2005**
(21) Anmeldenummer: 00909349.3
(22) Anmeldetag: 10.03.2000
(51) Int. Cl.: F02B 23/10, F02B 17/00

(54) **DIREKTEINSPRITZENDE OTTO-BRENNKRAFTMASCHINE**
DIRECT INJECTION, SPARK IGNITION INTERNAL COMBUSTION ENGINE
MOTEUR A COMBUSTION INTERNE A ALLUMAGE COMMANDE A INJECTION DIRECTE

(30) Priorität: 12.03.1999 DE 19911023
(43) Veröffentlichungstag der Anmeldung: 12.12.2001
(60) Teilanmeldung: 05005090.5
(73) Patentinhaber: DaimlerChrysler AG, 70567 Stuttgart (DE)
(72) Erfinder: ERNST, Johannes, D-76534 Baden-Baden (DE); GANZ, Benedikt, D-76477 Elchesheim-Illingen (DE); KLENK, Rolf, D-70327 Stuttgart (DE); RÖSSLER, Klaus, D-73776 Altbach (DE)
(86) Internationale Anmeldenummer: PCT/EP2000/002078
(87) Internationale Veröffentlichungsnummer: WO 2000/055481

(56) Entgegenhaltungen:
- EP-A- 0 835 994
- DE-A- 19 546 945
- DE-A- 19 749 295
- DE-C- 19 642 653
- GB-A- 2 323 633
- US-A- 4 790 270
- US-A- 5 327 864
- US-A- 5 577 473

## Beschreibung

Die Erfindung betrifft eine direkteinspritzende Otto-Brennkraftmaschine der im Patentanspruch 1 bzw. Patentanspruch 2 angegebenen Gattung.

Bei direkteinspritzenden Otto-Brennkraftmaschinen ist ein Brennraum in jedem Zylinder von einem längsbeweglichen Kolben und der Innenwand eines Zylinderkopfes begrenzt, wobei ein Injektor Kraftstoff zur inneren Gemischbildung mit separat zugeführter Verbrennungsluft in den Brennraum einspritzt. Die Zusammensetzung des Kraftstoff/Luft-Gemisches muss im Bereich der Zündkerze innerhalb des zündfähigen Fensters liegen, um mittels eines Zündfunkens zündbar zu sein, welcher zwischen den Elektroden einer Zündkerze auslösbar ist.

Aus der EP 835994 A2 ist eine direkteinspritzende Brennkraftmaschine bekannt, welche einen Pultdachförmigen Brennraum und einen mittig angeordneten Injektor aufweist, wobei die Elektroden der Zündkerze in der Nähe des Einlassventils angeordnet sind. Der Kraftstoff wird in Form eines Hohlkegels in einen Kolben eingespritzt, der eine Mulde mit einem kreisförmigen vorstehenden Teil aufweist, und prallt gegen die Kolbenmulde. Der dabei gestreute Kraftstoff wird durch eine Tumbleströmung zu den Elektroden der Zündkerze transportiert, wobei der kreisförmige vorstehende Teil der Kolbenmulde den zerstäubten Kraftstoff daran hindert, in Richtung der Zylinderwand gestreut zu werden, wodurch eine stabile Schichtlade-Verbrennung gewährleistet wird.

Aus der DE 196 42 653 C1 ist ein Verfahren zur Bildung eines zündfähigen Gemisches im Brennraum einer direkteinspritzenden Brennkraftmaschine bekannt, bei dem ein Injektor verwendet wird, mit dem der Öffnungshub des Ventilgliedes und die Einspritzzeit variabel einstellbar sind, so dass insbesondere im Schichtladungsbetrieb eine verbrauchs- und emissionsoptimierte innere Gemischbildung ermöglicht wird. Weiterhin sieht die DE 196 42 653 C1 vor, dass die Elektroden der Zündkerze in eine Gemischwolke einragen und bei geringfügigen Ablagerungen infolge Kraftstoffbenetzung während des Einspritzvorgangs zuverlässig zünden sollen.

Aus der DE 195 46 945 A1 ist eine direkteinspritzende Brennkraftmaschine bekannt, deren Injektoren mit ihren Einspritzdüsen den Kraftstoff kegelförmig in den Brennraum einspritzen, wobei die Zündkerze derart angeordnet ist, dass ihre Elektroden außerhalb der Mantelfläche des von der Einspritzdüse erzeugten Kraftstoffkegels liegen. Auf diese Weise wird eine Benetzung der Elektroden mit Kraftstoff beim Einspritzvorgang vermieden und der Russablagerung auf den Elektroden aufgrund unvollständig verbrannten Kraftstoffes entgegengewirkt. Die Elektroden sind über einen langen Betriebszeitraum von Verkokungen frei, wodurch ein ordnungsgemäßes Arbeiten der Brennkraftmaschine ohne Zündaussetzer gewährleistet sein soll. Um zündfähiges Gemisch zwischen die außerhalb des Kraftstoffkegels angeordneten Elektroden zu bringen, ist die Zündkerze derart angeordnet, dass die Masseelektrode mit einem geringen Abstand zur Mantelfläche des Kraftstoffkegels liegt und die Innenwand des Zylinderkopfes parallel zur Mantelfläche des Kraftstoffkegels verläuft unter Ausbildung eines Zwischenraumes zumindest an derjenigen Stelle, an der die Elektroden der Zündkerze angeordnet sind.

In dem Zwischenraum soll sich eine Wirbelströmung ergeben, welche aus Kraftstoff/Luft-Gemisch besteht und in den Bereich der Elektroden reicht. Um die Wirbelströmung zu generieren, ist eine besondere Formgebung der Innenwand und eine injektornahe Anordnung der Zündkerze erforderlich. Der Injektor ist in einer Einsenkung der Innenwand angeordnet, also vom freien Brennraumvolumen zurückgesetzt, wodurch der Gemischwirbel in dem der Einspritzdüse benachbarten Bereich entstehen und in dem Hohlraum zirkulieren soll, welcher zwischen der Mantelfläche des Kraftstoffkegels und der Innenwand des Zylinderkopfes im Bereich der Einspritzdüse gebildet ist. Des weiteren soll durch den Luftspalt zwischen dem Kraftstoffkegel und der parallelen, ebenso kegelförmigen Innenwand des Zylinderkopfes Luft zurückströmen, die von dem in den Brennraum eingespritzten Kraftstoff verdrängt wurde. Während der Rückströmung zur Zündkerze entlang der Innenwand sollen weitere Kraftstoffteilchen aus dem Kraftstoffkegel mitgerissen werden. Die Wirbelströmung ist im injektornahen Bereich genügend stark ausgebildet, um zündfähiges Gemisch zwischen die Elektroden einer Zündkerze zu bringen. Die Zündkerze muss demnach nahe dem Injektor angeordnet sein.

Bei der bekannten direkteinspritzenden Otto-Brennkraftmaschine muss die Brennraumbegrenzung insbesondere durch die Innenwand des Zylinderkopfes mit hohem Aufwand präzise gestaltet werden, um die gewünschten strömungstechnischen Effekte zur Bildung der zündfähigen Gemischwirbel zu erreichen. Die bekannte Brennraumkonfiguration mit der zur Gemischwirbelbildung erforderlichen Brennraumform und der zwangsläufig injektornah angeordneten Zündkerze kann oftmals einen optimalen Verbrennungsvorgang nicht erreichen und das gewünschte Betriebsverhalten der Brennkraftmaschine gewährleisten.

Der vorliegenden Erfindung liegt die Aufgabe zugrunde, die direkteinspritzende Otto-Brennkraftmaschine der gattungsgemäßen Art derart auszubilden, dass die Brennkraftmaschine mit optimalem Betriebsverhalten arbeitet.

Diese Aufgabe wird erfindungsgemäß mit den Merkmalen des Anspruchs 1 bzw. des Anspruchs 2 gelöst.

Das erfindungsgemäße Verfahren zum Betrieb einer direkteinspritzenden Otto-Brennkraftmaschine zeichnet sich dadurch aus, dass die Brennkraftmaschine einen Brennraum, der in jedem Zylinder von einem längsbeweglichen Kolben mit einer Kolbenmulde und der Innenwand eines Zylinderkopfes begrenzt ist, und einen Injektor mit einer Einspritzdüse aufweist, wobei dem Brennraum Verbrennungsluft separat zugeführt wird, und zur Bildung eines zündfähigen Kraftstoff/Luft-Gemisches Kraftstoff mittels der Einspritzdüse hohlkegelförmig in den Brennraum mit einem Öffnungswinkel (α) des Hohlkegelstrahls zwischen 70° und 110° eingespritzt wird, wobei das Gemisch von einer Zündkerze zu zünden ist, deren Elektroden außerhalb der Mantelfläche des von der Einspritzdüse erzeugten Kraftstoffkegels liegen, wobei ein strahlgeführtes Brennverfahren vorgenommen wird, bei dem in einem Schichtladungsbetrieb der Kraftstoff während des Kompressionshubs in den Brennraum als ein von der Brennraumbegrenzung unbeeinflusster Freistrahl eingespritzt wird, so dass bei luftgefülltem Brennraum eine zentrale Kraftstoffwolke gebildet wird, und sich aus der Mantelfläche des eingespritzten Kraftstoffstrahls Kraftstoffwirbel bilden und sich torusförmig derart konzentrieren, dass die Elektroden der Zündkerze in die Kraftstoffwirbel einragen, und das Kraftstoff/Luft-Gemisch mittels der Zündkerze gezündet wird.

Weiterhin zeichnet sich die direkteinspritzenden Otto-Brennkraftmaschine dadurch aus, dass die Brennkraftmaschine einen Brennraum, der in jedem Zylinder von einem längsbeweglichen Kolben mit einer Kolbenmulde und der Innenwand eines Zylinderkopfes begrenzt ist, und einen Injektor aufweist, dessen Einspritzdüse Kraftstoff kegelförmig in den Brennraum einspritzt zur Bildung eines zündfähigen Kraftstoff/Luft-Gemisches mit separat zugeführter Verbrennungsluft, wobei eine Zündkerze und deren Elektroden außerhalb der Mantelfläche des von der Einspritzdüse erzeugten Kraftstoffkegels liegen, der Kraftstoff in einem Schichtladungsbetrieb in Form eines von der Brennraumbegrenzung unbeeinflussten Freistrahls in den Brennraum eingespritzt wird, die Einspritzdüse nach außen öffnend derart ausgebildet ist, so dass der Kraftstoff als ein Hohlkegel mit einem Öffnungswinkel (α) zwischen 70° und 110° eingespritzt wird und sich durch die aus der Mantelfläche hervortretenden Kraftstoffwirbel im Brennraum torusförmig konzentriert, und die Zündkerze derart angeordnet ist, dass die Elektroden der Zündkerze in die aus der Mantelfläche des erzeugten Kraftstoffkegels hervortretenden Kraftstoffwirbel einragen.

Bei der erfindungsgemäßen Brennraumkonfiguration wird der Kraftstoffkegel in einem von der Brennraumbegrenzung nahezu unbeeinflussten Freistrahl eingespritzt, d.h. der Kraftstoffkegel wird in einem derartig großen Abstand, insbesondere von der Innenwand des Zylinderkopfes eingespritzt, daß sich der kegelförmige Kraftstoffstrahl weitgehend ohne strömungsmechanische Wandeffekte der Brennraumbegrenzung im freien Brennraumvolumen ausbreitet. Dabei bilden sich bei der Einspritzung aus der Mantelfläche des Kegels hervortretende Kraftstoffwirbel, welche zunächst hauptsächlich aus Kraftstoffdampf bestehen und sich mit der umliegenden Verbrennungsluft im Brennraum vermischen. Die Kraftstoffwirbel bilden sich besonders deutlich aus, wenn der Öffnungswinkel des Kraftstoffstrahlkegels zwischen 70° und 110° beträgt und werden durch eine Luftströmung erzeugt, welche im Bereich der Mantelfläche des Kraftstoffkegels aufgrund vom Kraftstoffstrahl mitgerissener Luft entsteht, wobei in entgegengesetzter Richtung durch den entstehenden Unterdruck ebenfalls eine Luftströmung erzeugt wird. Die Zündkerze wird erfindungsgemäß derart positioniert, dass die Elektroden in den Kraftstoffwirbel des Freistrahls einragen. Vorzugsweise ist die Funkenlage der Elektroden 1 mm bis 15 mm von der Mantelfläche des Kraftstoffkegels entfernt.

Der Kraftstoffwirbel, welcher zündfähiges Gemisch zwischen die Elektroden bringt, bildet sich an der Mantelfläche des Freistrahls ohne wirksamen Einfluss von der Brennraumbegrenzung aus, so dass die Brennraumform frei gestaltbar ist. Es liegt ein so genanntes strahlgeführtes Brennverfahren vor, bei dem Wandeffekte der Innenwand des Zylinderkopfes oder etwa einer Kolbenmulde kaum Einfluss auf die Gemischbildung und die Zündung ausüben. Insbesondere im Schichtladungsbetrieb der Brennkraftmaschine, wenn mit Kraftstoffeinspritzung während des Kompressionshubes gearbeitet wird und bei luftgefülltem Brennraum eine zentrale Kraftstoffwolke gebildet wird, kann so mit einer einfachen Brennraumgestaltung ein optimales Durchbrennen der Brennraumladung erreicht werden. Ein weiterer Vorteil der erfindungsgemäßen Gemischbildung ist darin zu sehen, daß die Zündkerze weiter als bisher vom Injektor entfernt angeordnet sein kann. Der Kraftstoffwirbel liegt lange stabil nahezu an derselben Stelle im Brennraum, wodurch die Zündung in einem weiten Zeitintervall unabhängig vom Einspritzpunkt erfolgen kann.

Der Kraftstoff-Freistrahl wird vorzugsweise hohlkegelförmig in den Brennraum eingespritzt. Hierdurch bilden sich die Kraftstoffwirbel in einer besonders zum Gemischtransport zur Zündkerze geeigneten Form aus, insbesondere bei einer Einspritzung bei hohem Zylinderdruck in der Kompressionsphase während des Schichtladungsbetriebes. Zur Ausbildung des vorteilhaften Hohlkegelstrahls wird zweckmäßig ein Injektor mit einer nach außen öffnenden Einspritzdüse eingesetzt. Die Einspritzdüse sollte dabei derart ausgestaltet sein, dass der Kraftstoff möglichst senkrecht zur Oberfläche des öffnenden Ventilgliedes aus dem Injektor austritt, so dass Ablagerungen und der Bildung von Verkokungen entgegengewirkt ist. Vorteilhaft können Einspritzdüsen mit Drallerzeugern eingesetzt werden oder auch Injektoren mit zwei Magnetspulen zur Bewegung des nach außen öffnenden Ventilgliedes. Auch nach innen, also in den Innenraum des Injektors öffnende Einspritzdüsen können vorteilhaft sein, welche einen ausgeprägten Hohlkegelstrahl erzeugen. Dadurch ergibt sich eine stärkere Kraftstoffkonzentration am Strahlrand mit mehr als 2/3 der gesamten Einspritzmenge im äußeren Drittel des Kraftstoffkegels. Zur Ausbildung des Hohlkegelstrahls können auch vorteilhaft Injektoren mit Mehrlochdüsen eingesetzt werden, wobei die Kraftstofföffnungen der Mehrlochdüse derart angeordnet sind, daß sich aus den durchtretenden Einzelstrahlen bei der Kraftstoffeinspritzung ein Hohlkegelstrahl ergibt. Grundsätzlich kann jeder Injektor für die erfindungsgemäße Kraftstoffeinspritzung in einem Freistrahl geeignet sein, der mit seinem konstruktiven Aufbau einen ausgeprägten Hohlkegelstrahl erzeugt.

Zur Ausbildung ausgeprägter Kraftstoffwirbel am Einspritzkegel wird der Injektor derart angeordnet, daß ein Winkel zwischen einer Symmetrieachse des Kraftstoffkegels und einer Zylinderachse des Zylinders weniger als 25° beträgt. Die Einspritzdüse sollte in einem Abstand von weniger als 20 mm von der Zylinderachse entfernt liegen. Zweckmäßig wird der Injektor zentral im Brennraum angeordnet, wobei die Symmetrieachse des eingespritzten Kraftstoffkegels mit der Zylinderachse des Zylinders zusammenfällt.

In einer vorteilhaften Weiterbildung der Erfindung sind pro Zylinder zwei Zündkerzen vorgesehen. Durch eine Doppelzündung, bei der beide Zündkerzen Zündfunken ausbilden, kann das Risiko von Zündaussetzern vermindert werden. Auch unter extremen Betriebsbedingungen der Brennkraftmaschine, wenn gegebenenfalls der Kraftstoffwirbel zu mageres Gemisch zwischen die Elektroden einer Zündkerze transportiert, so kann doch die Zündung durch die jeweils andere Zündkerze sichergestellt werden. Die beiden Zündkerzen können in gleicher Entfernung vom Injektor im Brennraum angeordnet sein. Liegen die Zündkerzen mit ihren jeweiligen Funkenlagen in unterschiedlichen Abständen zum Injektor, so kann in Abhängigkeit des Betriebspunktes der Brennkraftmaschine jeweils die Zündkerze zur Zündung eingesetzt werden, welche bezüglich der Ausbildung der Kraftstoffwirbel günstiger liegt. Die Lage der Kraftstoffwirbel wird vom Gegendruck im Brennraum beeinflusst, so dass die zur Zündung optimale Funkenlage abhängig von den Betriebsbedingungen der Brennkraftmaschine wie dem Einspritzzeitpunkt im Kennfeld der Brennkraftmaschine unterschiedlich ist. Auf diese Weise kann die Zündung des Kraftstoffwirbels auf jeden Fall durch eine der zündenden Zündkerzen mit unterschiedlichen Funkenlagen relativ zum Kraftstoffkegel sichergestellt werden.

Vorteilhaft ist eine Steuereinheit vorgesehen, welche in Abhängigkeit der Betriebsbedingungen bestimmt, welche der beiden Zündkerzen zur Zündung des Kraftstoff/Luft-Gemisches eingesetzt wird. Dabei wird abhängig von der Betriebsart (Schichtladung oder homogene Gemischbildung) und den Betriebsbedingungen die Zündung am jeweils günstigsten Zündort sichergestellt, an dem die aus dem Kraftstoffkegel hervortretenden Kraftstoffwirbel die Elektroden der entsprechenden Zündkerze erfasst.

Die Gemischbildung im Brennraum kann durch geeignete Lenkung der einströmenden Verbrennungsluft verbessert werden. Beispielsweise kann die verbrennungsluft in einer Tumble-Bewegung in den Brennraum eingebracht werden, wobei die Verbrennungsluft in etwa kreisförmiger Bewegung in einer Ebene der Zylinderachse rotiert. Eine effektive Zündung wird dabei durch die Zündkerze gewährleistet, welche in einem hinteren Abschnitt des Strömungsweges der Verbrennungsluft im Brennraum liegt. Bei einer Tumble-Strömung mit zunächst etwa parallel zum Brennraumdach einströmender Verbrennungsluft wird die Zündkerze daher vorzugsweise im Bereich des Lufteinlasses angeordnet, das heißt benachbart des Einlassventils, beispielsweise zwischen zwei Einlassventilen bei Mehrventilmotoren. Bei umgekehrter Tumble-Strömung (Reverse-Tumble) wird die Zündkerze entsprechend vorzugsweise auf der Auslassseite angeordnet. Des weiteren kann die Gemischbildung der erfindungsgemäßen Otto-Brennkraftmaschine mit Kraftstoffeinspritzung in einem Freistrahl durch drallförmige Ladungsbewegung im Brennraum verbessert werden. Mit einer Drallströmung der Verbrennungsluft um die Zylinderachse können bei der Gemischbildung Unsymmetrien und Strähnigkeit des eingespritzten Kraftstoffstrahls vermindert werden und somit die Zündbedingungen im Bereich der am Kraftstoffkegel hervortretenden Wirbel verbessert werden. Der Drall kann durch entsprechend geformte Einlasskanäle, so genannte Drall- oder Spiralkanäle, durch Versetzung der Einlassventile oder gedrehtem Ventilstern oder bei Mehrventilmotoren mittels Ventilabschaltung oder verstellbaren Drosselelementen im Ansaugtrakt erzeugt werden.

Der optimale Öffnungswinkel des Kraftstoffkegels im Winkelbereich zwischen 70° und 110° zur Ausbildung kräftiger Kraftstoffwirbel im Strahlrandbereich ist abhängig von der Brennraumform, insbesondere vom Anstellwinkel der Ventilachsen der Gaswechselventile. Bei einem Dachwinkel des Brennraumdaches von 180° beträgt der optimale Strahlwinkel des Kraftstoffkegels etwa 90°. Es hat sich als vorteilhaft herausgestellt, den Öffnungswinkel des Kraftstoffkegels bei einer Abnahme des Dachwinkels von etwa 10° um etwa 1° bis 2° zu reduzieren. Gute Gemischkonfigurationen werden in einem Akzeptanzbereich von etwa 20° oberhalb und unterhalb des theoretisch optimalen Öffnungswinkels des Kegelstrahls erreicht, also im Winkelbereich von etwa 70° bis 110°.

Die Zündung erfolgt vorzugsweise nach dem Ende des Einspritzvorganges etwa 0,1 ms bis 1,5 ms nach dem Einspritzende.

Ein Ausführungsbeispiel der Erfindung ist nachstehend anhand der Zeichnung näher erläutert. Es zeigen:
- Fig. 1: einen Längsschnitt durch eine Otto-Brennkraftmaschine,
- Fig. 2: eine Vergrößerung eines Endabschnittes der Ventilnadel eines Injektors,
- Fig. 3: in schematischer Darstellung die Lage des Kraftstoffes im Brennraum nach der Einspritzung,
- Fig. 4: einen Querschnitt durch eine Otto-Brennkraftmaschine mit einer Doppelzündung.

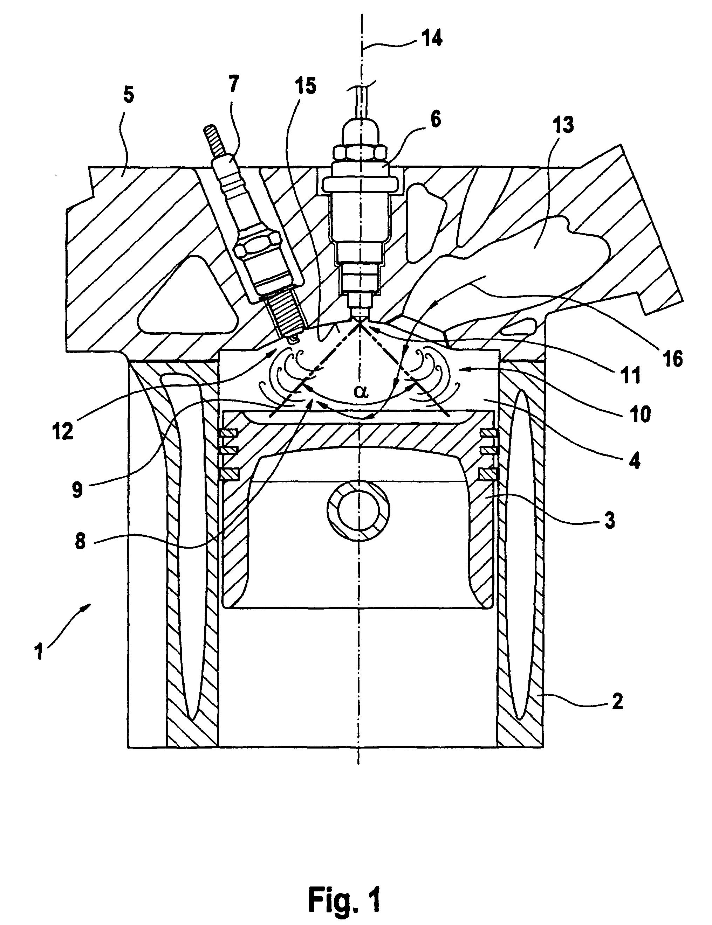

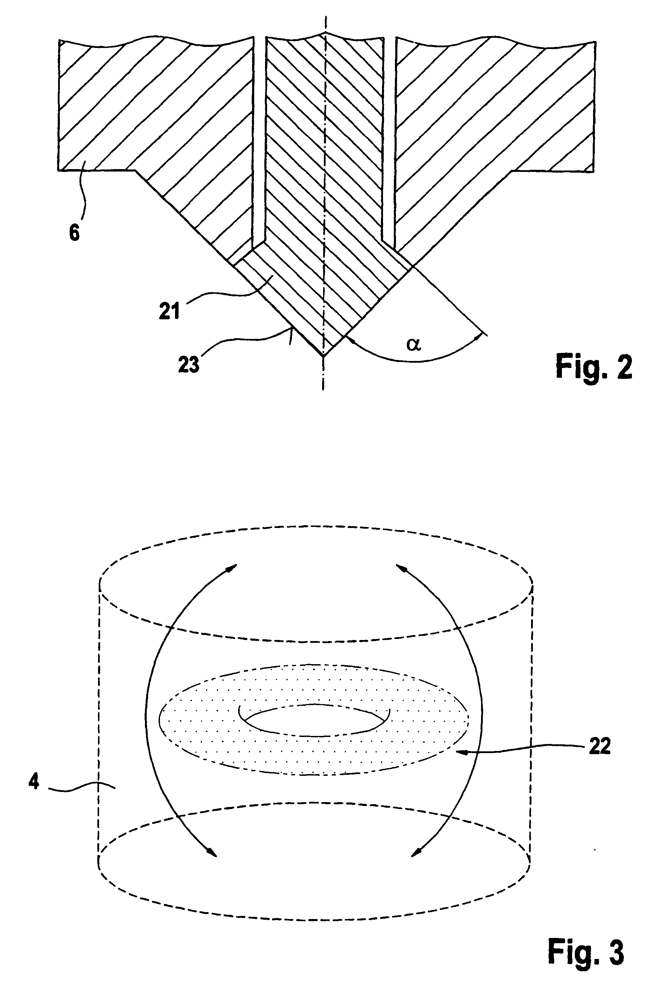

Fig. 1 zeigt eine direkteinspritzende Otto-Brennkraftmaschine 1, in deren Zylinder 2 ein Kolben 3 längsbeweglich angeordnet ist und mit der Innenwand 15 eines auf den Zylinder 2 aufgesetzten Zylinderkopfes 5 einen Brennraum 4 begrenzt. Im Zylinderkopf 5 ist ein Kraftstoff-Injektor 6 angeordnet, welcher zentral auf der Zylindermittelachse 14 liegend Kraftstoff auf den Kolben 3 gerichtet direkt in den Brennraum 4 einspritzt. Die zur inneren Gemischbildung erforderliche Verbrennungsluft 16 wird durch einen Einlasskanal 13 dem Brennraum 4 zugeführt. Im Zylinderkopf 5 ist weiter eine Zündkerze 7 angeordnet, deren Elektroden 12 in den Brennraum 4 einragen, wobei zum Zündzeitpunkt ein Zündfunke zwischen den Elektroden 12 ausgelöst wird, welcher beim Überspringen zündfähiges Gemisch im Brennraum 4 durchschlägt.

Der Injektor 6 weist eine nach außen öffnende Einspritzdüse 11 auf, welche einen sich zum Kolben erweiternden, hohlkegelförmigen Kraftstoffstrahl erzeugt. Die Elektroden 12 der Zündkerze 7 liegen außerhalb der Mantelfläche 9 des von der Einspritzdüse 11 erzeugten Kraftstoffkegels 8 und werden so beim Einspritzvorgang nicht mit Kraftstoff benetzt.

Der Injektor wird piezoelektrisch betätigt, wobei die Einspritzdüse 11 von einem Piezoelement schnell und präzise einstellbar freigegeben und geschlossen wird. Durch die entsprechende Wahl der Einspritzzeit und deren präzise Einhaltung während des Arbeitsspiels mittels der piezoelektrischen Betätigung des Injektors wird die Ausbildung der gewünschten Freistrahlform des Kraftstoffkegels gefördert.

Die Brennkraftmaschine arbeitet in weiten Kennfeldbereichen im Schichtladungsbetrieb, wobei der Kraftstoff während des Kompressionstaktes des Zylinders 2 eingespritzt wird. Aufgrund der späten Kraftstoffeinspritzung während des Arbeitsspiels entsteht eine geschichtete Brennraumladung mit örtlich unterschiedlichen Kraftstoffkonzentrationen, wobei sich außerhalb des Kraftstoffkegels 8 sehr mageres Gemisch bildet bzw. reine Luft befindet.

Um zündfähiges Gemisch zwischen die Elektroden 12 der Zündkerze 7 zu bringen, weist die Brennkraftmaschine eine derartige Brennraumkonfiguration auf, dass der Kraftstoffkegel 8 in einem von der Brennraumbegrenzung durch die Zylinderkopf-Innenwand 15 weitgehend unbeeinflussten Freistrahl eingespritzt wird. Die Mantelfläche 9 des Kraftstoffkegels 8 kann weit von der Innenwand 15 entfernt liegen, wobei sich an dem vom Wandeinfluss der Brennraumbegrenzung entkoppelten Freistrahl Kraftstoffwirbel 10 bilden, welche aus der Mantelfläche 9 herausragen. Der Öffnungswinkel α des Kraftstoffkegels 8 beträgt zwischen 70° und 110°, wobei sich die Kraftstoffwirbel 10 am Kegelrand besonders ausgeprägt ergeben. Der optimale Öffnungswinkel α des Kraftstoffwinkels 8 wird von der Gestalt des Brennraumes beeinflusst, beispielsweise von der Kontur der Zylinderkopf-Innenwand oder auch der Ausrichtung der Aus- und Einlasskanäle und der Gaswechselventile, das heißt der Strömungsrichtung der Verbrennungsluft im Brennraum 4. Bei einer ebenen Innenwand mit einem Neigungswinkel von 0° beträgt der optimale Öffnungswinkel α etwa 90°, wobei ausreichend kräftige Kraftstoffwirbel 10 am Kegelrand in einem Winkelbereich von etwa 20° oberhalb und unterhalb des optimalen Öffnungswinkels α ausgebildet werden. Mit zunehmender Neigung der Brennraumbegrenzung durch die Zylinderkopf-Innenwand 15 verringert sich der optimale Öffnungswinkel α um etwa 1° bis 2° bezogen auf etwa 10° Zunahme der Innenwandneigung.

Die Kraftstoffwirbel 10 entstehen aufgrund einer Luftströmung im Bereich der Mantelfläche 9 des Kraftstoffkegels durch vom Kraftstoffstrahl mitgerissene Luft, wobei dieser Strömung entgegengesetzt durch den entstehenden Unterdruck ebenfalls eine Luftströmung erzeugt wird. Die Kraftstoffwirbel 10 transportieren Kraftstoff in weit außerhalb des Kraftstoffkegels 8 liegende Brennraumbereiche und vermischen sich dort mit der Verbrennungsluft 16, die in einer Tumbleströmung gemäß Pfeilrichtung in den Brennraum 4 strömt. Bei der Tumbleströmung bewegt sich die Brennraumladung in einer Ebene, die in der Zylinderachse 14 liegt.

Die Zündkerze ist derart angeordnet, dass die Elektroden 12 in den Gemischwirbel 10 einragen. Auch im außerhalb des Kraftstoffkegels 8 liegenden Brennraumbereich, in dem sich die Elektroden 12 vor direkter Kraftstoffbenetzung geschützt befinden, kann so mit den bei Freistrahleinspritzung vorliegenden Kraftstoffwirbeln 10 zündfähiges Gemisch an der Zündkerze 7 bereitgestellt werden.

Die Kraftstoffwirbel 10 bilden sich nahezu unabhängig von der Brennraumform aus und die Innenwand 15 des Zylinderkopfes 5 kann daher beliebig gestaltet werden. Der Einspritzfreistrahl ist hohlkegelförmig, wodurch ein hoher Anteil der gesamten Kraftstoff-Einspritzmenge in der Mantelfläche 9 des Kegelstrahls 8 geführt wird und so von den Kraftstoffwirbeln 10 erfassbar ist. Der Zündzeitpunkt kann in einem weiten Bereich im wesentlichen unabhängig vom Einspritzzeitpunkt variiert und bedarfsweise eingestellt werden, da die Kraftstoffwirbel über einen längeren Zeitraum stabil im Brennraum ausgeprägt werden und etwa 50° KW nach dem Einspritzende noch Kraftstoff an der Zündkerze 7 vorliegt.

Aufgrund der Stabilität der Kraftstoffwirbel 10 und des zur Zündung bereitstehenden langen Zeitraumes kann die Zündkerze 7 relativ weit vom Injektor 6 entfernt im Zylinderkopf angeordnet werden, wodurch sich die Brennraumkonfiguration und die konstruktive Gestaltung des Zylinderkopfes 5 wesentlich vereinfacht. Der Abstand der Funkenlage entsprechend der Anordnung der Elektroden 12 zur Einspritzdüse kann zwischen 7 mm und 30 mm betragen. Die Funkenlage ist dabei zwischen 1 mm bis 15 mm von der Mantelfläche 9 des Kraftstoffkegels 8 entfernt. Die Distanz der Elektroden 12 zum Kraftstoffkegel 8 wird entsprechend dem gewünschten Betriebsverhalten im jeweiligen Einsatzfall der direkteinspritzenden Otto-Brennkraftmaschine 1 gewählt.

Fig. 2 zeigt eine Vergrößerung des in den Brennraum einragenden Endabschnitts des Injektors 6. In dem Injektor 6 ist eine längs verschiebliche Ventilnadel 21 angeordnet, welche nach außen, das heißt in den Brennraum öffnend das Verschlussglied des Injektors 6 bildet. Die Spitze der Ventilnadel 21 und der Ventilsitz des Injektors 6 sind derartig ausgebildet, dass der einzuspritzende Kraftstoffstrahl in einem Winkel α aus dem Injektor 6 austritt, welcher in einem Fenster zwischen 70° und 110° liegt. Besonders vorteilhaft tritt der Kraftstoffstrahl senkrecht zu den Oberflächen der außen liegenden Kanten 23 der Ventilnadel 21 aus, wodurch sich eine verringerte Empfindlichkeit der Ventilnadel bezüglich Ablagerungen oder der Bildung von Verkokungen ergibt. Der Austrittswinkel α bestimmt dabei den Öffnungswinkel des Hohlkegelstrahls, welcher durch den Injektor 6 erzeugt wird.

Fig. 3 zeigt in schematischer Darstellung einen Brennraum 4, in dem der Kraftstoff durch die hervortretenden Wirbel aus der Mantelfläche des eingespritzten Kraftstoffstrahls torusförmig konzentriert wird. Der Kraftstofftorus 22 wird sich bei der Gemischbildung im Innenraum 4 entsprechend der Strömungsrichtung der einströmenden Verbrennungsluft bewegen. Vorteilhaft sind so genannte Tumble-Strömungen oder Reverse-Tumble, wobei sich eine Ladungsbewegung in Pfeilrichtung ergibt.

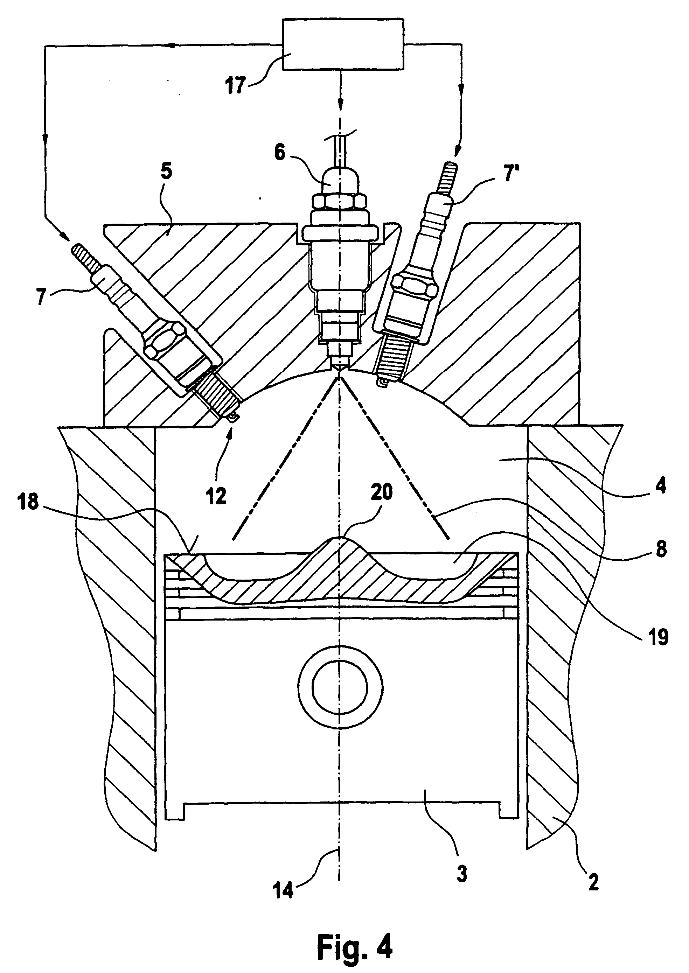

Fig. 4 zeigt eine Ausbildung der erfindungsgemäßen Otto-Brennkraftmaschine 1 mit zwei Zündkerzen 7, 7' pro Zylinder 2. Für gleiche Bauteile sind der Einfachheit halber die Bezugszeichen aus Fig. 1 vorgesehen.

Der Injektor 6 ist in zentraler Lage im Brennraum auf der Zylinderachse 14 angeordnet und spritzt einen hohlkegelförmigen Kraftstoffstrahl 8 in den Brennraum 4 ein. Die beiden Zündkerzen 7, 7' sind unsymmetrisch zur Zylinderachse 14 in unterschiedlichen Abständen zum Injektor 6 im Zylinderkopf 5 angeordnet. Die Funkenlagen entsprechen der jeweiligen Lage der Elektroden 12 der Zündkerzen 7, 7' und sind bei den beiden Zündkerzen relativ zum Kraftstoffkegel 8 unterschiedlich. Im Kennfeld der Brennkraftmaschine 1 sind bei verschiedenen Lastbereichen unterschiedliche Einspritzzeitpunkte im Hinblick auf das Betriebsverhalten der Brennkraftmaschine 1 vorteilhaft. Dabei treten aus dem Kegelmantel 8 Kraftstoffwirbel an unterschiedlichen Stellen abhängig von der Betriebsart (Schichtladungsbetrieb/homogene Gemischbildung) und den Betriebsbedingungen der Brennkraftmaschine auf. In Abstimmung mit der Mantelzone, in dem über das gesamte Schichtladungskennfeld der Brennkraftmaschine Kraftstoffwirbel auftreten können, sind die Zündkerzen 7, 7' angeordnet, wobei jede der Zündkerzen 7, 7' benachbart der Extremlagen der Kraftstoffwirbel in dem möglichen Kegelmantelbereich liegen. Auf diese Weise ist sichergestellt, dass in jedem Betriebspunkt mit Schichtladung der Brennkraftmaschine und unter sämtlichen möglichen Betriebsbedingungen die auftretenden Kraftstoffwirbel von mindestens einer der beiden zur Verfügung stehenden Zündkerzen 7, 7' zündbar ist.

Die Elektroden 12 beider Zündkerzen 7, 7' liegen außerhalb des Hohlkegelstrahls 8 und sind so vor direkter Benetzung mit Kraftstoff geschützt. Vorteilhaft bestimmt eine Steuereinheit 17 in Abhängigkeit der vorgesehenen Betriebsart der Brennkraftmaschine 1 und Messwerten der Betriebsbedingungen der Brennkraftmaschine (z. B. Drehzahl, Last), welche der beiden Zündkerzen 7, 7' zur Zündung des Kraftstoff/Luft-Gemisches im Brennraum 4 eingesetzt wird. Entsprechende Daten zur Steuerung der Zündung können in einem Kennfeldspeicher der Steuereinheit 17 zur bedarfsweisen Entnahme zur Verfügung gestellt sein. Die Steuereinheit 17 koordiniert die Zündung, das heißt die Wahl der Zündkerze 7, 7' und den Zündzeitpunkt mit den Einspritzparametern und steuert den Injektor 6. Die Zündung erfolgt vorzugsweise nach der Beendigung des Einspritzvorganges, idealer weise in einem Zeitraum zwischen 0,1 ms und 1,5 ms nach dem Einspritzende.

Es kann zweckmäßig sein, beispielsweise unter extremen Betriebsbedingungen der Brennkraftmaschine, beide Zündkerzen 7, 7' im gleichen Arbeitsspiel des Kolbens 3 einzusetzen und durch eine Doppelzündung in unterschiedlichen Funkenlagen die sichere Gemischzündung sicherzustellen.

Der Kolben 3 weist in seinem Kolbenboden 18 eine Kolbenmulde 19 auf, welche mit einer turbinenschaufelartigen Kontur die Ausbildung der aus dem Kraftstoffstrahl 8 hervortretenden Kraftstoffwirbel unterstützt und insbesondere im Schichtladungsbetrieb zur Stabilisierung der torusförmigen Gemischwolke beiträgt. Die Kolbenmulde 19 weist eine mittige Erhebung 20 auf, welche etwa auf Höhe der Symmetrieachse des Hohlkegelstrahls 8 liegt, also bei der vorliegenden Brennraumkonfiguration sich in zentraler Lage im Kolbenboden 18 befindet. Die zentrale Erhebung wird von einer wulstartigen Einsenkung umgeben, wobei eine schaufelartige Kontur für den auftreffenden Kraftstoffstrahl gebildet ist.

## Patentansprüche

1. Verfahren zum Betrieb einer direkteinspritzenden Otto-Brennkraftmaschine, welche einen Brennraum (4), der in jedem Zylinder (2) von einem längsbeweglichen Kolben (3) mit einer Kolbenmulde und der Innenwand (15) eines Zylinderkopfes (5) begrenzt ist, und einen Injektor (6) mit einer Einspritzdüse (11) aufweist, mit folgenden Verfahrensschritten:
- dem Brennraum (4) wird Verbrennungsluft separat zugeführt,
- zur Bildung eines zündfähigen Kraftstoff/Luft-Gemisches wird Kraftstoff mittels der Einspritzdüse (11) hohlkegelförmig in den Brennraum (4) mit einem Öffnungswinkel (α) des Hohlkegelstrahls zwischen 70° und 110° eingespritzt, wobei
- das Gemisch von einer Zündkerze (7) zu zünden ist, deren Elektroden (12) außerhalb der Mantelfläche (9) des von der Einspritzdüse (11) erzeugten Kraftstoffkegels (8) liegen, wobei
- ein strahlgeführtes Brennverfahren vorgenommen wird, bei dem in einem Schichtladungsbetrieb der Kraftstoff während des Kompressionshubs in den Brennraum (4) als ein von der Brennraumbegrenzung unbeeinflusster Freistrahl eingespritzt wird, so dass bei luftgefülltem Brennraum eine zentrale Kraftstoffwolke gebildet wird, und
- sich aus der Mantelfläche (9) des eingespritzten Kraftstoffstrahls Kraftstoffwirbel (10) bilden und sich torusförmig derart konzentrieren, dass die Elektroden (12) der Zündkerze (7) in die Kraftstoffwirbel (10) einragen, und das Kraftstoff/Luft-Gemisch mittels der Zündkerze (7) gezündet wird.

2. Direkteinspritzende Otto-Brennkraftmaschine mit einem Brennraum (4), der in jedem Zylinder (2) von einem längsbeweglichen Kolben (3) mit einer Kolbenmulde und der Innenwand (15) eines Zylinderkopfes (5) begrenzt ist, mit
- einem Injektor (6), dessen Einspritzdüse (11) Kraftstoff kegelförmig in den Brennraum (4) einspritzt zur Bildung eines zündfähigen Kraftstoff/Luft-Gemisches mit separat zugeführter Verbrennungsluft, wobei
- eine Zündkerze (7) und deren Elektroden (12) außerhalb der Mantelfläche (9) des von der Einspritzdüse (11) erzeugten Kraftstoffkegels (8) liegen,
- der Kraftstoff in einem Schichttadungsbetrieb in Form eines von der Brennraumbegrenzung unbeeinflussten Freistrahls in den Brennraum (4) eingespritzt wird,
- die Einspritzdüse (11) nach außen öffnend derart ausgebildet ist, so dass der Kraftstoff als ein Hohlkegel mit einem Öffnungswinkel (α) zwischen 70° und 110° eingespritzt wird und sich durch die aus der Mantelfläche (9) hervortretenden Kraftstoffwirbel (10) im Brennraum torusförmig konzentriert, und
- die Zündkerze derart angeordnet ist, dass die Elektroden (12) der Zündkerze (7) in die aus der Mantelfläche (9) des erzeugten Kraftstoffkegels (8) hervortretenden Kraftstoffwirbel (10) einragen.

3. Otto-Brennkraftmaschine nach Anspruch 2,
**dadurch gekennzeichnet, dass** der Injektor (6) eine nach außen öffnende Einspritzdüse (11) aufweist.

4. Otto-Brennkraftmaschine nach Anspruch 2,
**dadurch gekennzeichnet, dass** der Injektor (6) eine Mehrlochdüse umfasst, wobei die Düsenlöcher der Mehrlochdüse derart angeordnet sind, dass sich aus den durchtretenden Einzelstrahlen bei der Kraftstoffeinspritzung ein Hohlkegelstrahl (8) ergibt

5. Otto-Brennkraftmaschine nach einem der Ansprüche 2 bis 4,
**dadurch gekennzeichnet; dass** der Injektor (6) derart angeordnet ist, dass ein Winkel zwischen einer Symmetrieachse des Kraftstoffkegels (8) und einer Zylinderachse (14) des Zylinders (2) weniger als 25° beträgt.

6. Otto-Brennkraftmaschine nach Anspruch 5,
**dadurch gekennzeichnet, dass** die Einspritzdüse (11) in einem Abstand von weniger als 20 mm von der Zylinderachse entfernt liegt.

7. Otto-Brennkraftmaschine nach einem der Ansprüche 2 bis 6,
**dadurch gekennzeichnet, dass** der Injektor (6) piezoelektrisch betätigt wird.

8. Otto-Brennkraftmaschine nach einem der Ansprüche 2 bis 7,
**dadurch gekennzeichnet, dass** die Funkenlage der Elektroden (12) 1 mm bis 15 mm von der Mantelfläche (9) des Kraftstoffkegels (8) entfernt ist.

9. Otto-Brennkraftmaschine nach einem der Ansprüche 3 bis 8,
**dadurch gekennzeichnet, dass** die Funkenlage der Elektroden (12) 7 bis 30 mm von der Einspritzdüse (11) entfernt ist.

10. Otto-Brennkraftmaschine nach einem der Ansprüche 2 bis 9,
**dadurch gekennzeichnet, dass** zwei Zündkerzen (7, 7') pro Zylinder (2) vorgesehen sind.

11. Otto-Brennkraftmaschine nach Anspruch 10,
**dadurch gekennzeichnet, dass** die Funkenlagen der beiden Zündkerzen (7, 7') in gleichem Abstand zum Injektor (6) liegen.

12. Otto-Brennkraftmaschine nach Anspruch 10 oder11,
**dadurch gekennzeichnet, dass** die Zündkerzen (7, 7') mit ihren jeweiligen Funkenlagen in unterschiedlichen Abständen zum Injektor (6) angeordnet sind.

13. Otto-Brennkraftmaschine nach einem der Ansprüche 10 bis 12,
**dadurch gekennzeichnet, dass** beide Zündkerzen (7, 7') zur Zündung eingesetzt werden.

14. Otto-Brennkraftmaschine nach einem der Ansprüche 2 bis 13,
**gekennzeichnet durch** eine Brennraumkonfiguration mit abgelenkter Einströmung der Verbrennungsluft in dem Brennraum (4) unter Ausbildung einer Tumble-Strömung in einer die Zylinderachse (14) einschließenden Ebene, wobei die Zündkerze (7, 7') in einem hinteren Abschnitt des Strömungsweges der Verbrennungsluft im Brennraum (4) liegt.

15. Otto-Brennkraftmaschine nach einem der Ansprüche 2 bis 14,
**dadurch gekennzeichnet, dass** ein Kolbenboden (18) des Kolbens (3) mit einer Kolbenmulde (19) versehen ist, die eine Schaufelkontur mit einer etwa auf Höhe des Zentrums des auftreffenden Kraftstoffkegels (8) liegenden Erhebung (20) aufweist.

## Claims

1. Method for operating a direct-injection, spark ignition internal-combustion engine, which has a combustion chamber (4), which is delimited in each cylinder (2) by a longitudinally movable piston (3) with a piston recess and the inner wall (15) of a cylinder head (5), and an injector (6) with an injection nozzle (11), comprising the following method steps:
- combustion air is supplied separately to the combustion chamber (4),
- to form a combustible fuel/air mixture, fuel is injected in the form of a hollow cone by the injection nozzle (11) into the combustion chamber (4) at a cone angle (α) of the hollow conical jet of between 70° and 110°, wherein
- the mixture is to be ignited by a spark plug (7), the electrodes (12) of which are located outside the lateral surface (9) of the fuel cone (8) generated by the injection nozzle (11), wherein
- a jet-guided combustion process is carried out, in which, in a stratified charging operation, the fuel is injected into the combustion chamber (4) during the compression stroke as a free jet uninfluenced by the combustion chamber limitation, so a central fuel cloud is formed when the combustion chamber is filled with air, and
- fuel vortices (10) form from the lateral surface (9) of the injected fuel jet and are concentrated in a torus shape in such a way that the electrodes (12) of the spark plug (7) project into the fuel vortices (10), and the fuel/air mixture is ignited by means of the spark plug (7).

2. Direct-injection, spark ignition internal-combustion engine with a combustion chamber (4), which is delimited in each cylinder (2) by a longitudinally movable piston (3) with a piston recess and the inner wall (15) of a cylinder head (5), comprising
- an injector (6), the injection nozzle (11) of which injects fuel conically into the combustion chamber (4) to form an ignitable fuel/air mixture with separately supplied combustion air, wherein
- a spark plug (7) and its electrodes (12) are located outside the lateral surface (9) of the fuel cone (8) generated by the injection nozzle (11),
- the fuel is injected into the combustion chamber (4) in a stratified charging operation in the form of a free jet uninfluenced by the combustion chamber limitation,
- the injection nozzle (11) is configured opening outwardly in such a way that the fuel is injected as a hollow cone with a cone angle (α) between 70° and 110° and is concentrated in the form of a torus in the combustion chamber by the fuel vortices (10) emerging from the lateral surface (9), and
- the spark plug is arranged in such a way that the electrodes (12) of the spark plug (7) project into the fuel vortices (10) emerging from the lateral surface (9) of the fuel cone (8) generated.

3. Spark ignition internal-combustion engine according to claim 2, **characterised in that** the injector (6) has an outwardly opening injection nozzle (11).

4. Spark ignition internal-combustion engine according to claim 2, **characterised in that** the injector (6) comprises a multi-holed nozzle, wherein the nozzle holes of the multi-holed nozzle are arranged in such a way that a hollow conical jet (8) is produced from the individual jets passing through during fuel injection.

5. Spark ignition internal-combustion engine according to any one of claims 2 to 4, **characterised in that** the injector (6) is arranged in such a way that an angle between an axis of symmetry of the fuel cone (8) and a cylinder axis (14) of the cylinder (2) is less than 25°.

6. Spark ignition internal-combustion engine according to claim 5, **characterised in that** the injection nozzle (11) is located at a distance of less than 20 mm away from the cylinder axis.

7. Spark ignition internal-combustion engine according to any one of claims 2 to 6, **characterised in that** injector (6) is actuated piezoelectrically.

8. Spark ignition internal-combustion engine according to any one of claims 2 to 7, **characterised in that** the spark position of the electrodes (12) is 1 mm to 15 mm from the lateral surface (9) of the fuel cone (8).

9. Spark ignition internal-combustion engine according to any one of claims 3 to 8, **characterised in that** the spark position of the electrodes (12) is 7 to 30 mm away from the injection nozzle (11).

10. Spark ignition internal-combustion engine according to any one of claims 2 to 9, **characterised in that** two spark plugs (7, 7') are provided per cylinder (2).

11. Spark ignition internal-combustion engine according to claim 10, **characterised in that** the spark positions of the two spark plugs (7, 7') are located at the same distance from the injector (6).

12. Spark ignition internal-combustion engine according to claim 10 or 11, **characterised in that** the spark plugs (7, 7') with their respective spark positions are arranged at different distances from the injector (6).

13. Spark ignition internal-combustion engine according to any one of claims 10 to 12, **characterised in that** the two spark plugs (7, 7') are used for ignition.

14. Spark ignition internal-combustion engine according to any one of claims 2 to 13, **characterised by** a combustion chamber configuration with deflected inflow of the combustion air into the combustion chamber (4) with the formation of a tumble flow in a plane including the cylinder axis (14), the spark plug (7, 7') being located in a rear section of the flow path of the combustion air in the combustion chamber (4).

15. Spark ignition internal-combustion engine according to any one of claims 2 to 14, **characterised in that** a piston head (18) of the piston (3) is provided with a piston recess (19), which has a blade contour with an elevation (20) located approximately at the level of the centre of the impacting fuel cone (8).

## Revendications

1. Procédé pour faire fonctionner un moteur à combustible interne à allumage commandé à injection directe, qui comporte une chambre de combustion (4), qui est limitée, dans chaque cylindre (2), par un piston (11) mobile longitudinalement comportant une auge de piston et par la paroi intérieure (15) du joint de culasse (15), et un injecteur (6) comportant un gicleur d'injection (11), comportant les étapes opératoires suivantes:
- de l'air de combustion est envoyé séparément à la chambre de combustion (4),
- pour la formation d'un mélange carburant - air inflammable, du carburant est injecté au moyen du gicleur (11) selon une configuration conique creuse dans la chambre de combustion (4) avec un angle d'ouverture (α) du jet conique creux entre 70° et 110°,
- le mélange devant être allumé par une bougie d'allumage (7), dont les électrodes (12) sont situées à l'extérieur de la surface enveloppe (9) du cône de carburant (8) formé par le gicleur (11),
- un procédé de combustion à pilote par le jet est mis en oeuvre, procédé lors duquel dans un fonctionnement d'alimentation stratifiée, le carburant est injecté pendant la course de compression dans la chambre de compression (4) sous la forme d'un jet libre non influencé par la limitation de la chambre de combustion, de sorte que dans le cas d'une chambre de combustion remplie d'air, il se forme un nuage central de carburant, et
- des tourbillons de carburant (10) se forment à partir de la surface enveloppe (9) du jet de carburant injecté et se concentrent avec une forme torique de telle sorte que les électrodes (12) de la bougie d'allumage (7) pénètrent dans les tourbillons de carburant (10) et que le mélange carburant / air est enflammé au moyen de la bougie d'allumage (7).

2. Moteur à combustion interne à allumage commandé à injection directe, comportant une chambre de combustion (4), qui est limitée dans chaque cylindre (2) par un piston (3) mobile longitudinalement, et comportant une auge de piston, et par la paroi intérieure (15) d'une culasse (5), comportant
- un injecteur (6) dont le gicleur (11) injecte du carburant avec une configuration conique dans la chambre de combustion (4) pour former un mélange carburant / air inflammable avec une arrivée séparée de l'air de combustion, dans lequel
- une bougie d'allumage (7) et ses électrodes (12) sont situées à l'extérieur de la surface enveloppe (9) du cône de carburant (8) produit par le gicleur (11), et
- le carburant est injecté dans un fonctionnement avec chargement stratifié sous la forme d'un jet libre non influencé par la limitation de la chambre, dans la chambre de combustion (4),
- le gicleur (11) est agencé de manière à s'ouvrir vers l'extérieur de sorte que le carburant est injecté sous la forme d'un cône creux ayant un angle d'ouverture (α) compris entre 70° et 110° et est concentré avec une forme torique dans la chambre de combustion, sous l'effet des tourbillons de carburant (10) se formant à partir de la surface enveloppe (9), et
- la bougie d'allumage est disposée de telle sorte que les électrodes (12) de la bougie d'allumage (7) pénètrent dans les tourbillons de carburant (10) qui apparaissent à partir de la surface enveloppe (9) du cône de carburant produit (8).

3. Moteur à combustion interne à allumage commandé selon la revendication 2, **caractérisé en ce que** l'injecteur (6) possède un gicleur (11) qui s'ouvre vers l'extérieur.

4. Moteur à combustion interne à allumage commandé selon la revendication 2, **caractérisé en ce que** l'injecteur (6) comprend un gicleur à trous multiples, les trous du gicleur à trous multiples étant disposés de telle sorte qu'on obtient un jet conique creux (8) à partir de jets individuels sortant par les trous, lors de l'injection de carburant.

5. Moteur à combustion interne à allumage commandé selon les revendications 2 à 4, **caractérisé en ce que** l'injecteur (6) est disposé de telle sorte qu'un angle entre un axe de symétrie du cône de carburant (8) et un axe (14) du cylindre (2) est inférieur à 25°.

6. Moteur à combustion interne à allumage commandé selon la revendication 5, **caractérisé en ce que** le gicleur (11) est distant de l'axe du cylindre d'une distance inférieure à 20 mm.

7. Moteur à combustion interne à allumage commandé selon l'une des revendications 2 à 6, **caractérisé en ce que** l'injecteur (6) est actionné par voie piézoélectrique.

8. Moteur à combustion interne à allumage commandé selon l'une des revendications 2 à 7, **caractérisé en ce que** la position d'étincelles des électrodes (12) est distante de 1 mm à 15 mm de la surface enveloppe (9) du cône de carburant (8).

9. Moteur à combustion interne à allumage commandé selon l'une des revendications 3 à 8, **caractérisé en ce que** la position des étincelles des électrodes (12) est écartée de 7 à 30 mm du gicleur (11).

10. Moteur à combustion interne à allumage commandé selon l'une des revendications 2 à 9, **caractérisé en ce que** deux bougies d'allumage (7, 7') sont prévues pour chaque cylindre (2).

11. Moteur à combustion interne à allumage commandé selon la revendication 10, **caractérisé en ce que** les positions d'étincelles des deux bougies d'allumage (7, 7') sont situées à une même distance par rapport à l'injecteur (6).

12. Moteur à combustion interne à allumage commandé selon la revendication 10 ou 11, **caractérisé en ce que** les bougies d'allumage (7, 7') sont disposées de telle sorte que leurs positions respectives d'étincelles sont situées à des distances respectives différentes de l'injecteur (6).

13. Moteur à combustion interne à allumage commandé selon l'une des revendications 10 à 11, **caractérisé en ce que** les deux bougies d'allumage (7, 7') sont utilisées pour l'allumage.

14. Moteur à combustion interne à allumage commandé selon l'une des revendications 2 à 13, **caractérisé par** une configuration de la chambre de combustion avec introduction déviée de l'air de combustion dans la chambre de combustion (4) moyennant la formation d'un écoulement à retournement (Tumble) dans un plan passant par l'axe (14) du cylindre, la bougie d'allumage (7, 7') étant située dans une section arrière du trajet d'écoulement de l'air de combustion dans la chambre de combustion (4).

15. Moteur à combustion interne à allumage commandé selon l'une des revendications 2 à 14, **caractérisé en ce qu'**un fond (18) du piston (3) est pourvu d'une auge de piston (19), qui possède un profil d'aube comportant une partie surélevée (20) située approximativement à hauteur du centre du cône de carburant (8), qui apparaît.
